# EUROPEAN PATENT APPLICATION

(11) **EP 1 689 182 A2**
(43) Date of publication of application: **09.08.2006**
(21) Application number: 06250427.9
(22) Date of filing: 26.01.2006
(51) Int. Cl.: H04N 7/16

(54) **Portable storage device, video appliance using the same, and channel restriction method for video appliance**

(30) Priority: 02.02.2005 KR 2005009598
(71) Applicant: Samsung Electronics Co., Ltd., Suwon-si, Gyeonggi-Do (KR)
(72) Inventor: Jin, Young-kyu, Gangnam-gu Seoul (KR); Park, Sang-hyun, Seongbuk-gu Seoul (KR); Choi, Seung-eok, Seocho-gu Seoul (KR)
(74) Representative: Brandon, Paul Laurence

(57) **Abstract**

A portable storage device (110) capable of enabling a user to view selectively the only program selected by the user, a video appliance (120) using the same, and a method of restricting a channel of the video appliance. The portable storage device includes a channel information storage unit (111) for storing channel restriction information to restrict a broadcast channel, and a channel information transmission unit (112) for transmitting the channel restriction information to a video appliance (120) for outputting broadcasting.

## Description

The present invention relates to portable storage devices, video appliances using the same, and channel restriction methods for the video appliances.

Recently, with the development of broadcasting, communication, and electronic technologies, television sets have been popularized to the public. Television sets have been highlighted as powerful information transmission means that substitute for the existing print media and radio media.

As visual and motion picture industries have been developed, various kinds of dramas and films, which viewers have never seen, are produced and broadcast through the television. Also, with the spread of television in the home, members of a family can always view broadcasting programs without distinction of age or gender. A television set is a device for receiving and processing broad signals for display through a display screen.

Since the viewers can freely view desired programs by manipulating a button for tuning a channel, there is a problem that intensely violent and sexual scenes, which can be distinguished between make-believe and reality by only adult-acquired developmental skills, are exposed to children and juveniles without any filtration. Accordingly, censorship of the broadcasting programs has been a social issue.

Although television is mass communication needed to broadcast all programs of various content having cultural, public, and entertainment purposes, it cannot always broadcast programs that all ages can view. Therefore, it is required to filter received programs in accordance with age brackets of viewers.

According to this necessity, the Consumer Electronics Manufacturers Association (CEMA) approved TV Parental Guidelines submitted to the Federal Communication Commission (FCC) on behalf of the National Association of Broadcasters, the Motion Picture Association, and many educator and parent groups.

After the decision of the CEMA, it was proposed that the so-called V-chip technologies should be included in all television sets. A packet that contains rating information of a currently broadcasting program is sent together with a caption signal included in a 21 st scanning line of a television broadcasting signal. The V-chip is a semiconductor chip for determining permission to view or block a program, which the television receiver is currently receiving, based on the received rating signal. The V-chip was developed by the Engineering Commission of the CEMA.

According to the TV Parental Guidelines, the following categories are applied to programs designated for children and entire audience: TV-Y is designated to be appropriate for all children; TV-Y7 is designated for children age 7 and older; TV-G is suitable for all ages; TV-PG is required for parental guidance; TV-14 is required to strongly urge parents to exercise greater care in monitoring this program; and TV-MA is specifically designated for mature audience only. The packet received by the V-chip contains rating information for the currently receiving program and a content indicator concerning the scene to be blocked. The content indicator contains one or more of the following designations: fantasy violence FV, violence V, sexual situation S, coarse or indecent language L, and suggestive dialogue D.

A user should have a personal identification number so that the user may only view the broadcast corresponding to the user's rating. Since the personal identification number is easily exposed to others, it is difficult to effectively block the viewing of the television programs.

Korean Patent Unexamined Publication No. 2000-9854 discloses an apparatus for restricting viewing of television programs using a user identification card to restrict the viewing of the television programs. This apparatus enables a user to view only programs corresponding to ratings predetermined through the identification card. However, this apparatus has the problem that it is difficult for the user to view only television programs separately selected by the user.

Preferred embodiments of the present invention aim to provide a portable storage device, a video appliance using the same, and a channel restriction method for the video appliance that enable a user to selectively view only programs selected by the user through program information on the corresponding programs.

According to an aspect of the present invention, there is provided a portable storage device, which comprises a channel information storage unit storing channel restriction information to restrict broadcasting channels; and a channel information transmission unit transmitting the stored channel restriction information to a video appliance that can output corresponding broadcasts.

According to another aspect of the present invention, there is provided a video appliance which comprises a program information storage unit storing program information on broadcasting programs that a user can view; a program information extraction unit extracting the program information on the broadcasting programs selected by the user among the stored program information; and a program information record unit for recording the extracted program information in a portable storage device.

According to still another aspect of the present invention, there is provided a video appliance which comprises a channel information readout unit reading channel restriction information to restrict broadcasting channels recorded in a portable storage device; a program information extraction unit extracting program information on broadcasting programs according to the read channel restriction information; and a control unit selectively outputting the broadcasting programs corresponding to the extracted program information.

According to still another aspect of the present invention, there is provided a channel restriction method for a video appliance which comprises storing program information on broadcasting programs that a user can view; extracting the program information on the broadcasting programs selected by the user among the stored program information; and recording the extracted program information in a portable storage device.

According to further still another aspect of the present invention, there is provided a channel restriction method for a video appliance which comprises reading channel restriction information whereby broadcasting channels recorded in a portable storage device can be restricted; extracting the program information on broadcasting programs in accordance with the read channel restriction information; and selectively outputting the broadcasting programs corresponding to the extracted program information.

Further features of the present invention are set out in the appended claims.

The present invention will be more apparent from the following detailed description of exemplary embodiments taken in conjunction with the accompanying drawings, in which:
FIG. 1 is a view illustrating a video system according to an exemplary embodiment of the present invention;
FIG. 2 is a view illustrating a portable storage device according to an exemplary embodiment of the present invention;
FIG. 3 is a view illustrating a video appliance according to an exemplary embodiment of the present invention;
FIG. 4 is a view illustrating program information printed by a print unit according to an exemplary embodiment of the present invention;
FIG. 5 is a flowchart illustrating a method of recording channel restriction information in a portable storage unit according to an exemplary embodiment of the present invention; and
FIG. 6 is a flowchart illustrating a method of outputting a program corresponding to channel restriction information stored in a portable storage unit according to an exemplary embodiment of the present invention.

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of appended claims. In the whole description of the present invention, the same drawing reference numerals are used for the same elements across various figures.

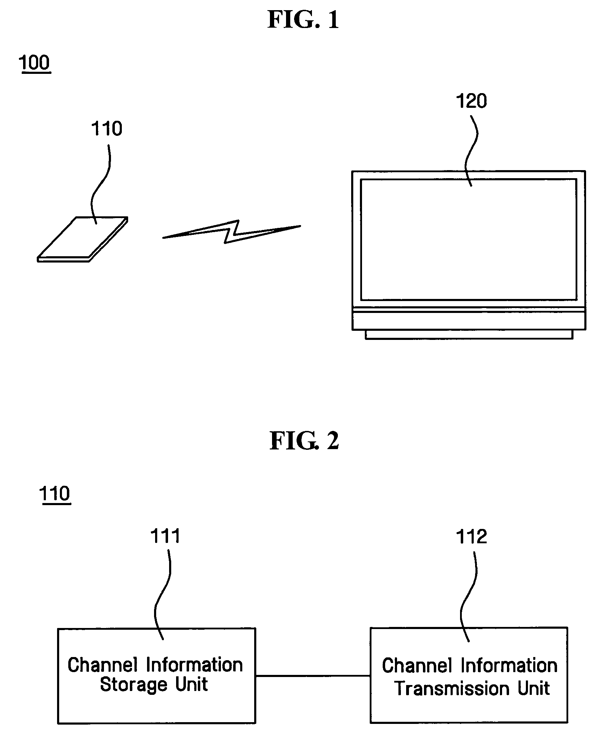

FIG. 1 is a view illustrating a video system according to an exemplary embodiment of the present invention.

As shown in FIG. 1, the video system 100 may include a portable storage device 110 that stores program information on broadcasting programs selected by a user, and a video appliance 120 that outputs only the broadcasting programs corresponding to the stored program information.

The portable storage device 110 may include a nonvolatile memory such as flash memory, and an integrated circuit (IC) card having a barcode or a color code printed thereon or a radio frequency identification (RFID) chip mounted thereon, which refers to contactless automatic recognition technology. Also, the portable storage device 110 is not limited to the nonvolatile memory and the IC card as described above, but may be a mobile communication appliance, such as a mobile phone and a personal data assistant (PDA), having the nonvolatile memory and the IC card mounted thereon.

FIG. 2 is a view illustrating a portable storage device according to an exemplary embodiment of the present invention.

As shown in FIG. 2, the portable storage device 110 may include a channel information storage unit 111 that stores channel restriction information to restrict broadcasting channels, and a channel information transmission unit 112 that transmits the channel restriction information stored in the channel information storage unit 111 to a video appliance 120.

The channel restriction information stored in the channel information storage unit 111 may include program information on each broadcasting program selected by a user (e.g., a program name, a program broadcasting time, and a program broadcasting channel), and other information (e.g., a memo).

The channel information transmission unit 112 may transmit the channel restriction information stored in the channel information storage unit 111 to the video appliance 120 in the case where the mobile storage device 110 is connected to the video appliance 120.

If the mobile storage device 110 is a nonvolatile memory as described above, the channel information transmission unit 112 transmits the channel restriction information stored in the nonvolatile memory to the video appliance 120. If the mobile storage device 110 is an IC card having the barcode or color code printed thereon or an RFID chip mounted thereon, the channel information transmission unit 112 may be integrated into the channel information storage unit 111. In other words, in the case where the channel restriction information is stored in the form of a barcode, a color code, or an RFID chip, the video appliance can read the channel restriction information directly from the barcode, the color code, or the RFID chip, and thus the channel information storage unit 111 may also serve as the channel information transmission unit 112.

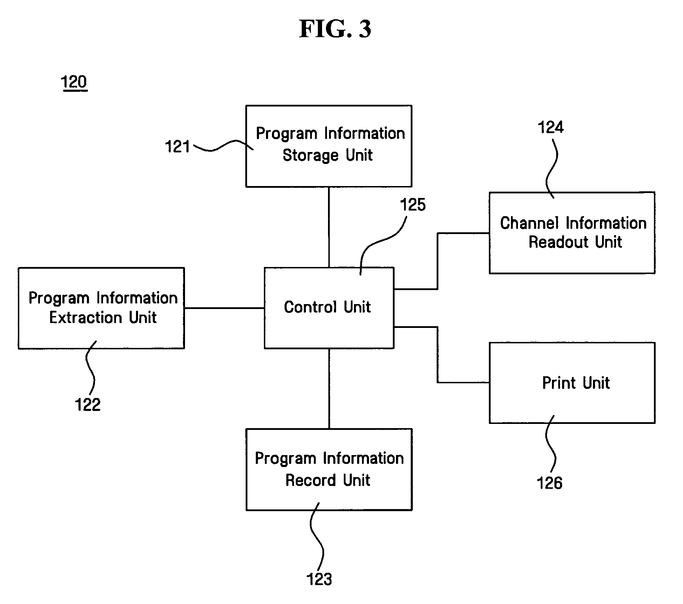

FIG. 3 is a view illustrating a video appliance according to an exemplary embodiment of the present invention.

The video appliance 120 includes a program information storage unit 121 that stores program information on all broadcasting programs that the user can view, a program information extraction unit 122 that extracts the program information, which correspond to the broadcasting programs selected by the user, among the program information stored in the program information storage unit 121, and a program information record unit 123 that records the extracted program information on the portable storage device 110.

The program information storage unit 121 receives and stores the program information on all broadcasting programs that the user can view. In this case, the program information may include a program name of a broadcasting program, a program broadcasting time, a program broadcasting channel, and program content.

If the user verifies and selects the program information stored in the program information storage unit 121 through a specified graphic user interface such as an electric program guide, the program information extraction unit 122 extracts the program information corresponding to the broadcasting program selected by the user.

The program information record unit 123 records the extracted program information in the portable storage device 110. In this case, the program information record unit 123 may simply store the program information in the portable storage device 110, print the program information in the form of a barcode or color code, or record the program information by remapping the RFID chip. In other words, if the portable storage device 110 is the nonvolatile memory, the extracted program information is recorded in the nonvolatile memory, while if the portable storage device 110 is the IC card having the barcode or color code printed thereon, the barcode or color code is printed on the IC card in accordance with the extracted program information.

The video appliance 120 may further include a channel information readout unit 124 that reads channel restriction information of the portable storage device 110, and a control unit 125 that outputs only the broadcasting program corresponding to the read channel restriction information.

Specifically, when the portable storage device 110, in which the channel restriction information is stored, is connected with the video appliance 120, the channel information readout unit 124 may read the channel restriction information stored in the channel information storage unit 111. At this time, the connection of the portable storage device 110 with the video appliance 120 means that the portable storage device 110 is in electric contact with the video appliance. This is exemplary, and the portable storage device 110 may communicate with the video appliance 120 through a wireless medium in a contactless state.

According to the result of recording, the program information extraction unit 122 may extract the channel restriction information from the channel information storage unit 111. The control unit 125 outputs only the program corresponding to the extracted channel restriction information. Specifically, the extracted channel information may include a program name, a program broadcasting time, and a program broadcasting channel. The control unit 125 automatically selects the corresponding channel at the time when the program is broadcast, so that the user can view the program. Also, the control unit 125 may turn on the power of the video appliance 120 at the time when the corresponding program is broadcast.

The video appliance 120 may include a print unit 126 for printing the extracted channel restriction information. The print unit 126 may print other information added by the user, in addition to the program information of the corresponding program. The other information can be input at the time when the user stores the channel restriction information in the portable storage device 110. Accordingly, the user can confirm viewable programs through the printed program information. Also, the print unit 126 can print the barcode or color code for the corresponding program, in addition to the program information and other information. Accordingly, the user can view the corresponding program through the barcode or color code of the printed program information.

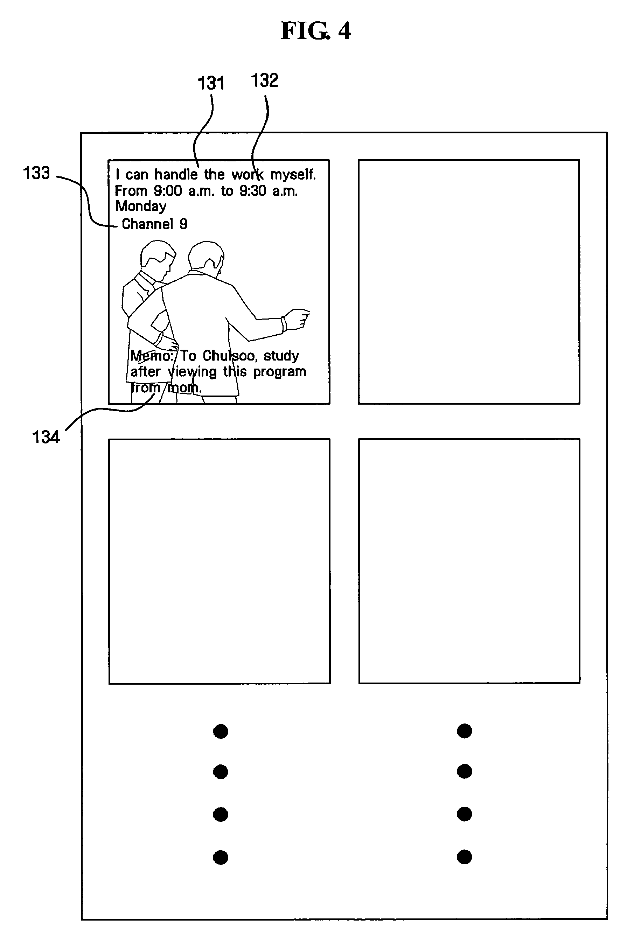

FIG. 4 is a view illustrating program information printed by the print unit according to an exemplary embodiment of the present invention.

As shown in FIG. 4, the printed program information may include a program name 131 of the corresponding broadcasting program, a program broadcasting time 132, a program broadcasting channel 133, and other information 134. Accordingly, the user can easily confirm the viewable programs through the printed program information.

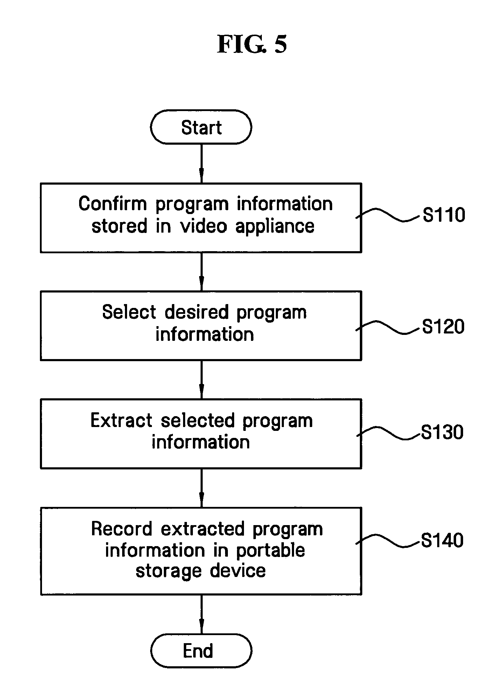

FIG. 5 is a flowchart illustrating a method of recording channel restriction information in the portable storage unit according to an exemplary embodiment of the present invention.

As shown in FIG. 5, the user confirms the program information stored in the video appliance 120 through a specified graphic user interface (S110). For example, the user confirms the program information stored in the program information storage unit 121 (e.g., the program name, the program broadcasting time, and the program broadcasting channel).

After confirming the program information, the user selects the program information on the desired broadcasting program (S120).

The program information extraction unit 122 extracts the program information of the broadcasting program selected by the user from the program information storage unit 121 (S 130).

Then, the program information record unit 123 records the extracted program information in the portable storage device 110 (S140). In this case, the program information record unit 123 may record the extracted program information through the barcode, color code, or RFID chip. Also, the user may input other information such as memos at the time when the extracted program information is recorded. In this case, the other information may be input to the portable storage device 110 together with the program information.

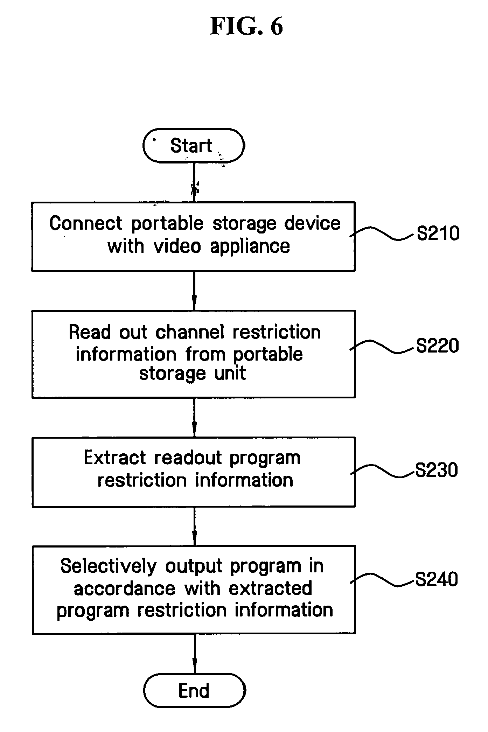

FIG. 6 is a flowchart illustrating a method of selectively outputting a program corresponding to the channel restriction information stored in the portable storage unit according to an exemplary embodiment of the present invention.

As shown in FIG. 6, the portable storage device 110 is connected to the video appliance 120 (S210). In this case, the portable storage device 110 may be in electric contact with the video appliance 120, or may communicate with the video appliance through a wireless medium in a contactless state.

When the portable storage device 110 is connected to the video appliance 120, the channel information readout unit 124 reads the channel restriction information stored in the channel information storage unit 111 (S220). According to the result of reading, the program information extraction unit 122 extracts the channel restriction information from the channel information storage unit 111 (S230). As described above, the extracted channel information may include the program name, the program broadcasting time, the program broadcasting channel, and other information.

The control unit 125 selectively outputs only the program corresponding to the extracted channel restriction information (S240). In other words, the user can view the broadcasting program included in the extracted channel restriction information only at the time when the corresponding broadcasting program is broadcast. For example, if the broadcasting time of the program corresponding to the extracted channel restriction information is from 7 p.m. to 9 p.m., and the present time is 5 p.m., the control unit 125 turns on the power of the video appliance 120 at 7 p.m. to output the corresponding broadcasting program.

The print unit 126 prints the extracted channel restriction information so that the user can easily confirm the program information and other information on the broadcasting program.

The portable storage device 110 may be used not only in the case of viewing the TV broadcasting program selected by the user but also in the case of viewing a charged program through a video on demand (VOD) service. Also, a self-service sell of programs through a vending machine and so on becomes possible by restricting the use frequency of the portable storage device 110.

As described above, according to the portable storage device, the video appliance using the same, and the channel restriction method for the video appliance according to the present invention, the user can view only the program selected by the user using the portable storage device in which program information is stored.

Although exemplary embodiments of the present invention have been described for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A portable storage device (110) comprising:
a channel information storage unit (111) which stores channel restriction information to restrict broadcasting channels; and
a channel information transmission unit (112) which transmits the stored channel restriction information to a video appliance (120) that can output corresponding broadcasts.

2. The portable storage device (110) as claimed in claim 1, wherein the channel restriction information includes program information selected among program information stored in a video appliance (120).

3. The portable storage device (110) as claimed in claim 2, wherein the program information includes at least one of a program name for a broadcasting program, a program broadcasting time, and a program broadcasting channel.

4. The portable storage device as claimed in claim 3, wherein the program information is stored in the form of at least one of a radio frequency identifier, a barcode, and a color code.

5. A video appliance (120) comprising:
a program information storage unit (121) which stores program information on broadcasting programs that a user is permitted view;
a program information extraction unit (122) which extracts the program information on the broadcasting programs selected by the user among the stored program information; and
a program information record unit (123) for recording the extracted program information in a portable storage device (110).

6. The video appliance (120) as claimed in claim 5, wherein the program information storage unit (121) includes at least one of a program name for a broadcasting program, a program broadcasting time, and a program broadcasting channel.

7. The video appliance as claimed in claim 6, wherein the program information record unit (123) records the extracted program information in the form of at least one of a radio frequency identifier, a barcode, and a color code, in the portable storage device (110).

8. A video appliance (120) comprising:
a channel information readout unit (124) which reads channel restriction information to restrict broadcasting channels recorded in a portable storage device (110);
a program information extraction unit (122) which extracts program information on broadcasting programs according to the read channel restriction information; and
a control unit (125) which selectively outputs the broadcasting programs corresponding to the extracted program information.

9. The video appliance (120) as claimed in claim 8, wherein the channel restriction information is recorded in the of at least one of a radio frequency identifier, a barcode, and a color code.

10. The video appliance (120) as claimed in claim 9, wherein the extracted program information includes at least one of a program name for a broadcasting program, a program broadcasting time, and a program broadcasting channel.

11. The video appliance (120) as claimed in claim 10, further comprising a program information print unit (126) which prints the extracted program information.

12. A channel restriction method for a video appliance comprising:
storing program information on broadcasting programs that a user is permitted view;
extracting the program information on the broadcasting programs selected by the user among the stored program information; and
recording the extracted program information in a portable storage device.

13. The method as claimed in claim 12, wherein the stored program information includes at least one of a program name for a broadcasting program, a program broadcasting time, and a program broadcasting channel.

14. The method as claimed in claim 13, wherein the program information recorded on the portable storage device is in the form of at least one of a radio frequency identifier, a barcode, and a color code.

15. A channel restriction method for a video appliance comprising:
reading channel restriction information whereby broadcasting channels recorded in a portable storage device can be restricted;
extracting program information on broadcasting programs in accordance with the read channel restriction information; and
selectively outputting the broadcasting programs corresponding to the extracted program information.

16. The method as claimed in claim 15, wherein the read channel restriction information is stored in the form at least one of a radio frequency identifier (RFID), a barcode, and a color code.

17. The method as claimed in claim 16, wherein the extracted program information includes at least one of a program name for a broadcasting program, a program broadcasting time, and a program broadcasting channel.

18. The method as claimed in claim 17, further comprising printing the extracted program information.
